# EUROPÄISCHE PATENTSCHRIFT

(11) **EP 0 755 764 B1**
(45) Veröffentlichungstag und Bekanntmachung des Hinweises auf die Patenterteilung: **29.12.1999**
(21) Anmeldenummer: 96112048.2
(22) Anmeldetag: 25.07.1996
(51) Int. Cl.: B29C 43/30, B29C 43/20

(54) **Verfahren zur Herstellung von homogenen Bodenbelags-Kunststoffbahnen oder -platten mit nicht gerichteter Farbmusterung**
Process for the production of homogeneous floor coverings or mats with a nondirectional colour pattern
Procédé pour la fabrication des revêtements de sol au tapis de plancher homogènes avec un motif coloré non-orienté

(30) Priorität: 27.07.1995 DE 19527553
(43) Veröffentlichungstag der Anmeldung: 29.01.1997
(73) Patentinhaber: DLW Aktiengesellschaft, D-74319 Bietigheim-Bissingen (DE)
(72) Erfinder: von Olnhausen, Heinz, 74321 Bietigheim-Bissingen (DE); Giese, Wolfgang, 74379 Ingersheim (DE)
(74) Vertreter: Müller-Boré & Partner Patentanwälte

(56) Entgegenhaltungen:
- EP-A- 0 582 770
- DE-C- 4 405 589
- DE-C- 4 426 172
- US-A- 2 083 201

## Beschreibung

Die vorliegende Erfindung betrifft ein Verfahren zur Herstellung von homogenen elastischen Bodenbelags-Kunststoffbahnen oder -platten mit nicht gerichteter Farbmusterung.

Der Begriff "homogen" bei elastischen Bodenbelags-Kunststoffbahnen oder -platten (im folgenden kurz Bodenbeläge) im Sinne der vorliegenden Erfindung ist so zu verstehen, wie er in DIN 16951 bzw. DIN EN 649 für flexible PVC-Bodenbeläge definiert ist. Solche Bodenbeläge bestehen aus einer oder mehreren Schichten gleicher Zusammensetzung und sind mehrfarbig durchgehend gemustert. Die physikalischen Eigenschaften solcher Bodenbeläge sind von der Oberseite bis zur Unterseite gleichbleibend (= homogen).

Unter dem Begriff "nicht gerichtete Farbmusterung" wird im Rahmen dieser Erfindung verstanden, daß die Bodenbeläge eine farbliche Musterung aufweisen, wobei die farbgebenden Strukturen im wesentlichen keine Vorzugsrichtung aufweisen.

Homogene elastische Bodenbeläge können hergestellt werden, indem das polymere Bindemittel, Füllstoffe und ggf. Hilfsstoffe vorgemischt werden und über Aggregate, wie z.B. Innenmischer, Zweiwellenextruder, Planetwalzenextruder oder Walzwerk, plastifiziert und granuliert werden. Nachfolgend werden die Granulate in Verdichtungsaggregaten, wie z.B. Kalander, Doppelbandpresse oder statische Presse, zu einem Bodenbelag verpreßt. Zur Erzielung mehrfarbig strukturierter Bodenbeläge werden verschiedenfarbige Granulate, die durch Mischen verschiedenfarbiger Pigmente erhalten werden, in den Verdichtungsaggregaten verpreßt.

Insbesondere lassen sich homogene elastische Bodenbeläge auf folgendem Weg erhalten: Die Bestandteile für das polymere Bindemittel, die Füllstoffe und ggf. Hilfsstoffe werden zusammen in einem Wirbelmischer kalt vermischt und anschließend in einem Innenmischer plastifiziert. Die Masse wird auf ein Walzwerk gegeben und ein Fellstreifen abgezogen, der nachfolgend einem Heißgranulator zugeführt wird. Das so erhaltene Granulat wird erwärmt und im Walzenspalt eines Kalanders zu einem Fell gewalzt. Eine mehrfarbige Struktur wird erzielt, wenn z.B. andersfarbiges Granulat vor der Herstellung des Fells zugemischt wird. Eine andere Möglichkeit zur Herstellung von homogenen elastischen Bodenbelägen besteht darin, das polymere Bindemittel und die Füllstoffe mit den Hilfsstoffen getrennt über gravimetrische Dosierungen einem Zweiwellenextruder zuzuführen und dort zu plastifizieren. Das Plastifikat wird kontinuierlich in einen Einwellenextruder überführt und nachfolgend zu einem Granulat verarbeitet, indem das austretende Plastifikat mittels rotierender Messer abgeschlagen wird. Das so erhaltene Granulat kann z.B. mittels einer Zweitrommelauma zu einer Platte verpreßt werden. Zur Erzielung der Musterung kann kurz vor Austritt der Masse an der Lochplatte des Einwellenextruders kaltes, andersfarbiges Granulat zudosiert werden.

Eine weitere Möglichkeit zur Herstellung von homogenen elastischen Bodenbelägen besteht darin, nach der Mischung der Bestandteile in einem Wirbelmischer die Plastifizierung in einem Planetwalzenextruder mit einwelligem Austragsteil durchzuführen. Das Plastifikat wird anschließend über eine Lochscheibe granuliert. Granulate verschiedener Farben werden homogen in einem Pflugscharmischer gemischt und nachfolgend in einem Umluftofen erwärmt. Das so erhaltene erwärmte Granulat wird dann im Kalanderspalt zu einem Fell ausgezogen, bevor es in einer Schlagkreuzmühle zerkleinert wird. Das erhaltene Granulat wird dann auf einer Doppelbandauma verpreßt.

In einem alternativen Herstellungsverfahren werden Bindemittel und Füllstoff(e), eventuell mit den Hilfstoffen, separat in einem Wirbelmischer gemischt und die Gemische einem Zweiwellenextruder zugeführt und plastifiziert. Aus dem Plastifikat wird dann ein Granulat gebildet, das auf einer Doppelbandpresse zu einem Belag verpreßt wird. Zur Erzielung mehrfarbig strukturierter Bodenbeläge wird dem Plastifikat durch eine Öffnung andersfarbiges Granulat zugeführt, ohne daß dabei eine Verteilung des andersfarbigen Granulats stattfindet.

In einem weiteren Herstellungsverfahren wird die Gesamtrezeptur, bestehend aus polymerem Bindemittel, Füllstoff(e) und ggf. Hilfsstoffen, auf einem Zweiwellenextruder plastifiziert. Nachfolgend wird das Plastifikat auf eine Seite eines Walzwerks dosiert, das einen keilförmigen Walzenspalt aufweist. Durch den keilförmigen Walzenspalt kann an der Abnahmeseite kontinuierlich ein Fellstreifen abgezogen werden, der einem Granulator zugeführt wird. Das erhaltene Granulat wird mittels einer statischen Presse zu Platten verpreßt. Mit diesem Verfahren können auch mehrfarbig strukturierte Bodenbeläge hergestellt werden. Dabei werden zunächst durch Zugabe von jeweils unterschiedlichen Pigmenten verschiedenfarbige Gesamtrezepturen erstellt und, wie vorstehend beschrieben, zu einem Granulat verarbeitet. Die verschiedenfarbigen Granulate werden dann gemeinsam z.B. auf ein Walzwerk dosiert und dann, wie oben beschrieben, weiterbehandelt.

Bei der üblichen Verarbeitungsweise war es bisher nicht möglich, nicht gerichtete Farbstrukturen in den mehrfarbigen Bodenbelägen auf einfache Weise zu erzielen. Aufgrund der Förderung des Granulatmaterials in Kalandrierrichtung und gleichzeitigem Erhitzen und Verpressen entsteht eine in Förderrichtung länglich verzogene Musterung. Damit ist es mit herkömmlichen Verfahren nicht möglich, in einem Arbeitsgang eine Musterung zu erzielen, die im wesentlichen keine Vorzugsrichtung hat, sondern die Musterstruktur ist, wie vorstehend erwähnt, stets parallel zur Förderrichtung ausgerichtet.

Zur Beseitigung dieses Nachteils können zwei oder mehr der im ersten Arbeitsgang hergestellten homogenen mehrfarbigen Bodenbeläge um jeweils 90° verdreht übereinander gestapelt und nochmals einer Kalandrier- oder Walzbehandlung unterworfen werden, wobei die übereinander angeordneten Kunststoffbahnen unter gegenseitiger Durchdringung miteinander verbunden werden. Dadurch ergibt sich durch Überlagerung der jeweils längs gerichteten aber um 90° verdrehten Musterstrukturen eine Struktur, bei der keine Vorzugsrichtung mehr erkennbar ist. Dazu ist allerdings mindestens ein weiterer Arbeitsschritt erforderlich, der einerseits die Produktionskosten erhöht und andererseits durch die zusätzliche Anwendung von Hitze und Druck zu einer Beeinträchtigung der Produkteigenschaften führt.

Ein anderes Verfahren der unerwünschten Längsorientierung der Musterstruktur entgegenzuwirken besteht darin, auf den im ersten Arbeitsgang hergestellten homogenen Bodenbelag farbiges Granulat zu streuen und den Bodenbelag nochmals einem Kalander oder Walzwerk zuzuführen. Dadurch wird das aufgestreute Granulat in Form von mehr oder weniger großen (je nach Größe des aufgestreuten Granulats), in der Regel zusammenhängenden Farbbereichen in die Oberfläche des Bodenbelags eingepreßt. Abgesehen davon, daß auch bei diesem Verfahren mindestens ein zweiter Arbeitsschritt erforderlich ist, läßt sich damit keine Feinmarmorierung erzielen, sondern die länglich angeordneten Farbbereiche werden lediglich durch weniger längliche zusammenhängende Farbbereiche unterbrochen.

In der Deutschen Patentschrift DE 44 26 172 ist ein mehrfarbig gemusterter Bodenbelag aus Gummi offenbart, der auf seiner Oberfläche ein kontrastfarbenes Kautschukgranulat oberflächenbündig in die Basisbahn eingepreßt und dort durch Vulkanisierung fixiert enthält. Die einzelnen Partikel sollen gemäß dieser Druckschrift zwei voneinander und von der Basisbahn verschiedenfarbige Partikelsektionen aufweisen, wobei eine zweite Partikelsektion eine erste keil- oder streifenförmig durchdringt. Durch dieses Verfahren soll die farbliche Gestaltungsfreiheit bezüglich des Designs des Bodenbelags ermöglicht werden. Ein Verfahren zur Verhinderung einer gerichteten Farbmusterung ist in dieser Druckschrift jedoch nicht angegeben.

Aufgabe der vorliegenden Erfindung ist es daher, ein Verfahren bereitzustellen, mit dem in einem Arbeitsgang homogene elastische Bodenbeläge mit nicht gerichteter Farbmusterung hergestellt werden können.

Diese Aufgabe wird durch das im Anspruch 1 definierte Verfahren gelöst. Gemäß der vorliegenden Erfindung werden die Bodenbeläge hergestellt, indem bei der Herstellung der Bodenbeläge mit Hilfe von z.B. einem Kalander oder einem Walzwerk ein mehrfarbiges Granulat verwendet wird, das eine längliche Gestalt aufweist. Das Verhältnis der größten Längenausdehnung zur größten Breitenausdehnung der Granulatteilchen liegt im Bereich von etwa 3:1 bis etwa 20:1, vorzugsweise im Bereich von etwa 5:1 bis etwa 15:1 und mehr bevorzugt im Bereich von etwa 8:1 bis etwa 12:1. Die Breite der Granulatteilchen entspricht dabei in etwa ihrer Dicke. Die Farbtöne in den Farbbereichen der Granulatteilchen sind im wesentlichen nicht miteinander vermischt und die Farbbereiche weisen eine Länge auf, die ein mehrfaches ihrer Breite beträgt. Vorzugsweise entspricht das Verhältnis der größten Längenausdehnung der Farbbereiche zu ihrer größten Breitenausdehnung im wesentlichen dem Verhältnis der entsprechenden Ausdehnungen des sie enthaltenden Granulatteilchens. Die länglichen Farbbereiche sind im wesentlichen parallel zur Längsachse der Granulatteilchen ausgerichtet.

Es hat sich überraschenderweise gezeigt, daß die Verwendung derartig länglich geformter Granulatteilchen mit entsprechend ausgebildeten Farbbereichen, die im Verhältnis zur ihrer Längenausdehnung relativ schmal sind, bei der Herstellung eines Bodenbelags mit Hilfe eines Walzwerks oder eines Kalanders zu farbigen Mustern führt, die kurze, im wesentlichen nicht gerichtete Strukturen aufweisen und eine Marmorierung ergeben, wie sie bisher nicht, bzw. nicht in einem Arbeitsgang zu erzielen waren.

Dieser Effekt läßt sich möglicherweise dadurch erklären, daß die in den länglichen Granulatteilchen enthaltenen und ebenfalls länglich ausgebildeten Farbbereiche durch das Verpressen unter Wärmeeinwirkung im Walzwerk oder Kalander verstreckt werden und dabei die schmalen Farbbereiche abreißen, wodurch kurze Farbstrukturen entstehen. Bei herkömmlichen Verfahren von üblichen mehrfarbigen Granulaten konnte dieser Effekt möglicherweise nicht auftreten, weil die Farbbereiche nicht das erforderliche Verhältnis von Längenausdehnung zu Breitenausdehnung aufweisen, um beim Verstrecken in kleine Bereiche getrennt zu werden.

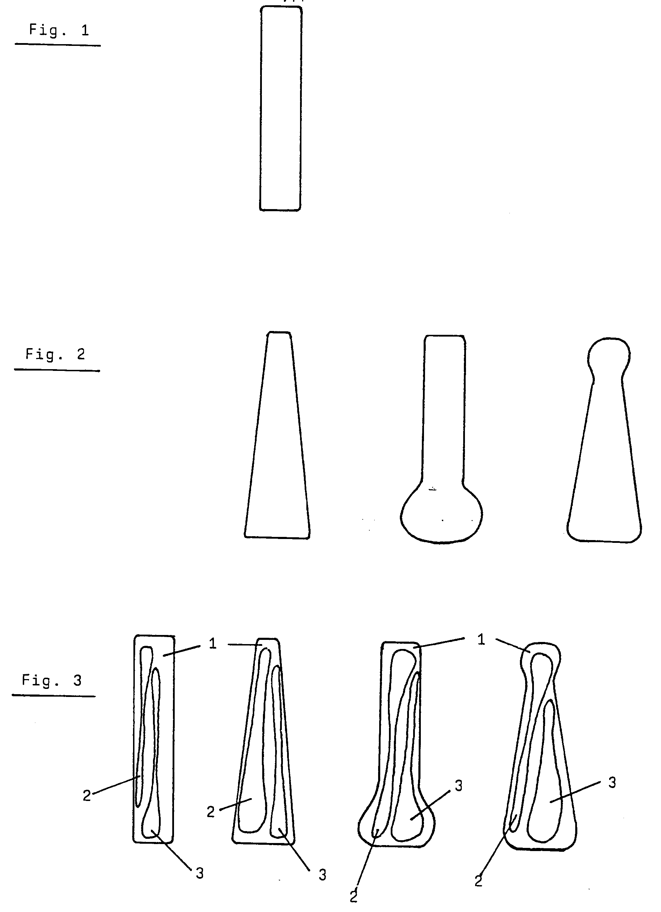

Die Granulatteilchen weisen gemäß der vorstehenden Beschreibung im einfachsten Fall eine etwa rechteckige Form auf, wie in Fig. 1 gezeigt. Vorzugsweise sind die erfindungsgemäß verwendeten länglichen Granulatteilchen jedoch so ausgebildet, daß die Enden unterschiedlich breit sind. Die Form kann beispielsweise keilförmig sein oder kegelförmig oder quaderförmig mit einem verdickten Ende, ähnlich der Form eines Streichholzes, wie es aus Fig. 2 ersichtlich ist.

Wenn die Granulatteilchen, die eine Länge von bis zu etwa 10 cm, vorzugsweise von etwa 1 cm bis etwa 5 cm und mehr bevorzugt von etwa 2 cm bis etwa 4 cm aufweisen, eine wie vorstehend beschriebene Form mit einem dickeren und einem dünneren Ende besitzen, orientieren sie sich wegen des Strömungswiderstands am dickeren Ende bei der Zuführung zum Walzwerk oder Kalander parallel zur Förderrichtung und treten somit in Längsrichtung in das Walzwerk oder den Kalander ein. Dies unterstützt die Neigung der Farbbereiche sich in den Granulatteilchen beim Verpressen und dem zwangsläufig dabei auftretenden Verstrecken in kleine Bereiche zu trennen. Die Neigung der Granulatteilchen, sich in Förderrichtung zu orientieren, kann mechanisch unterstützt werden, z.B. dadurch, daß die Zuführung zum Kalander Längsrippen oder Längsrillen aufweist.

Die mehrfarbigen Granulatteilchen werden, wie vorstehend beschrieben, hergestellt. Beispielsweise wird die ungefärbte oder einfarbige Kunststoffgrundmasse, gegebenenfalls zusammen mit Füllstoffen, Additiven und Hilfsstoffen, in einem Planetwalzenextruder oder Doppelwellenextruder plastifiziert, einem Einwellenextruder mit mindestens einem Aufgabeschacht zur Zudosierung von Schmuckgranulat (d.h. ein- oder mehrfarbiges Granulat mit von der Grundmasse verschiedenem Farbton bzw. Farbtönen) oder Pigment(en) zugeführt und am Ende des Einwellenextruders in einem Granulator mit Lochplatte und Granulatabschlageinrichtung zu einem Granulat verarbeitet.

Hinsichtlich der Pigmente bestehen keine besonderen Beschränkungen, sofern sie nur für die Herstellung und Verwendung von Bodenbelägen geeignet sind.

Die besondere Form des Granulats und die Verteilung der Farbkomponenten im Granulat werden durch die Gestaltung der Granulatordüse und der Form der Lochplattenöffnung erreicht, wobei die übrigen Parameter, wie z. B. Temperatur der Kunststoffgrundmasse, des Schmuckgranulats bzw. der Schmuckgranulate, Extrudergeometrie, Fördergeschwindigkeit der plastifizierten Kunststoffmasse, Zugabeort und -menge des Schmuckgranulats bzw. Pigments, Geschwindigkeit des Abschlagmessers der Granulatabschlageinrichtung usw. in geeigneter Weise einzustellen sind. Die Lochplattenöffnung kann beispielsweise die in Fig. 1 wiedergegebene Geometrie haben, und vorzugsweise eine Geometrie wie in Fig. 2 gezeigt, wobei die Maße nicht maßstabsgetreu sind, sondern nur der Veranschaulichung dienen.

In einer geeigneten Ausführungsform des Granulators geht der am Ende des Extruders kreisförmige Querschnitt der Granulatordüse allmählich in die Form der Lochplattenöffnung über, d.h. die zylindrische Form verändert sich zu einer ovalen Form. Die Wegstrecke, über die sich die zylindrische Form zu einer ovalen verändert, hat erheblichen Einfluß auf die Verteilung der Farbbereiche im Granulatteilchen und muß so gewählt werden, daß das relativ kurz vor dem Granulator zugegegebene Schmuckgranulat bzw. Pigment sich so in dem Granulatteilchen verteilen kann, daß die gewünschten schmalen Farbbereiche entstehen. Bei geeigneter Wahl der Geometrie der granulaterzeugenden Apparatur und der übrigen Parameter können mehrfarbige Granulatteilchen erhalten werden, wie sie in der Fig. 3 beispielhaft dargestellt sind.

In Fig. 3 stellen die mit 1 gezeichneten Bereiche des Granulats die ungefärbte bzw. einfarbige Kunststoffgrundmasse dar und die mit 2 und 3 bezeichneten Bereiche diejenigen Farbbereiche, die durch die Zugabe des Schmuckgranulats erzeugt werden und einen anderen Farbton sowohl untereinander als auch im Vergleich mit der Kunststoffgrundmasse aufweisen. Es können beliebig viele verschiedenfarbige Farbbereiche durch Zugabe entsprechend vieler Schmuckgranulate und gegebenenfalls Pigment(e) erzeugt werden, wobei in Fig. 3 lediglich zur Veranschaulichung zwei verschiedene Farbbereiche gezeigt sind.

Als Kunststoff, d.h. als polymeres Bindemittel, kann für die Herstellung der mehrfarbigen Granulate jedes Kunststoffmaterial verwendet werden, das für die Herstellung von elastischen Bodenbelägen geeignet ist, wie z. B. Kunststoffe auf Basis von Polyvinylchlorid (PVC), Ethylen-Vinylacetat-Copolymer (EVA), Homo-oder Copolymere von ethylenisch ungesättigten Verbindungen oder einem Gemisch davon, wie Polyethylen, Polypropylen, ggf. mit einem oder mehreren Comonomeren, Ethylen-Alkylacrylat-Copolymere, und Gemische davon. Weiterhin können Terpolymere, wie Ethylen-Propylen-Dien-Mischpolymere (EPDM), Blockcopolymere, wie Styrol-Isopren-Styrol (SIS) und Styrol-Butadien-Styrol (SBS) verwendet werden. Auch Bindemittel auf Basis von Linoleum sind geeignet. Von den vorgenannten Kunststoffen sind PVC und Linoleum bevorzugt.

Die erfindungsgemäß hergestellten Bodenbeläge können weiterhin übliche Füllstoffe, wie z.B. Kreide, Kaolin, Talkum, Holzmehl, Quarzmehl, Dolomit, Kieselerde, Schwerspat und Schiefermehl oder ein beliebiges Gemisch davon aufweisen, wobei der Anteil der Füllstoffe, bezogen auf die Kunststoffbahnen oder -platten 15 bis 80 Gew.-%, bevorzugt 50 bis 70 Gew.-%, besonders bevorzugt 60 bis 65 Gew.-%, beträgt. Wenn es sich um einen Bodenbelag auf Basis von PVC handelt, beträgt der Anteil an Füllstoff vorzugsweise etwa 25 Gew.-%.

Gegebenenfalls können weitere Pigmente, Antioxidantien, UV-Stabilisatoren sowie weitere übliche Hilfsstoffe, wie z.B. Gleitmittel, Antistatika oder Verarbeitungshilfsmittel zum Gesamtansatz, d.h. zu den Komponenten aus denen die Granulatteilchen hergestellt werden, zugesetzt werden. Diese Hilfsstoffe sind in diesem technischen Gebiet bekannt. Für die mehrfarbig strukturierten Bodenbeläge werden Pigmente unterschiedlicher Farbe verwendet. Dadurch lassen sich unterschiedliche Farben und Strukturen in den resultierenden Bodenbelägen erzielen. Überraschenderweise wurde gefunden, daß die erfindungsgemäß hergestellten Bodenbeläge, die mehrfarbig strukturiert sind, nicht nur eine im wesentlichen nicht gerichtete Farbmusterung aufweisen, sondern daß auch eine scharfe Begrenzung der Farbübergänge bis in kleinste Details ohne verwaschene Strukturen erzielt werden kann.

Die erfindungsgemäß hergestellten Bodenbeläge können auf ihrer Nutzfläche mit einem üblichen "Finish", z.B. handelsüblichen Acrylat-Pflegedispersionen oder UV-Lacken versehen sein, um das Anschmutzverhalten des Bodenbelags zu verbessern. Ferner können die erfindungsgemäß hergestellten Bodenbeläge auf ihrer Rückseite, d.h. auf der der Nutzseite gegenüberliegenden Seite, mit einer üblichen Haftvermittlerschicht versehen sein, die das Verkleben des Bodenbelags mit dem Untergrund erleichtert und die Haftung auf dem Untergrund verbessert. Die Haftvermittlerschicht weist eine Dicke von ca. 2-20 um auf.

Mit dem Verfahren gemäß der vorliegenden Erfindung können in der beschriebenen Weise in einem Arbeitsgang homogene elastische Bodenbelags-Kunststoffbahnen oder -platten hergestellt werden, die eine im wesentlichen nicht gerichtete Musterung aufweisen. Damit können auf einfache Weise Bodenbeläge mit Farbstrukturen hergestellt werden, die bisher nicht bzw. allenfalls mit aufwendigen Verfahren erhältlich waren.

## Patentansprüche

1. Verfahren zur Herstellung von homogenen elastischen Bodenbelags-Kunststoffbahnen oder -platten mit nicht gerichteter Farbmusterung, bei dem ein mehrfarbiges Granulat, das aus wenigstens zwei unterschiedlich gefärbten Massen, umfassend die Bestandteile des polymeren Bindemittels, das jeweilige Pigment und/oder den jeweiligen Farbstoff sowie gegebenenfalls übliche Füllstoffe, Additive und Verarbeitungshilfmittel hergestellt wurde, wobei die Teilchen Farbbereiche (2,3) aufweisen, in denen die Farbtöne im wesentlichen nicht miteinander vermischt sind und die Länge eines Farbbereichs ein Mehrfaches seiner Breite beträgt,
dadurch gekennzeichnet, daß
das mehrfarbige Granulat in einem Verdichtungsaggregat zu einer Bahn oder Platte verpreßt wird, wobei die mehrfarbigen Teilchen des Granulats eine Dicke in etwa der Breite aufweisen und deren Länge das etwa 3- bis etwa 20-fache der Breite beträgt und wobei die Farbbereiche (2,3) sich im wesentlichen parallel zur Längsachse der Granulatteilchen erstrecken.

2. Verfahren nach Anspruch 1, wobei die Länge des Granulatteilchens das etwa 5- bis etwa 15-fache der Breite beträgt.

3. Verfahren nach Anspruch 1, wobei die Länge des Granulatteilchens das etwa 8- bis etwa 12-fache der Breite beträgt.

4. Verfahren nach einem der Ansprüche 1 bis 3, wobei die Granulatteilchen eine Länge von bis zu etwa 10 cm aufweisen.

5. Verfahren nach einem der Ansprüche 1 bis 4, wobei die Granulatteilchen am einen Ende breiter ausgebildet sind als am anderen Ende.

6. Verfahren nach einem der Ansprüche 1 bis 5, wobei das polymere Bindemittel ein Polymer auf der Basis von PVC oder von Linoleum ist.

## Claims

1. Process for the production of homogeneous flexible floor covering webs or sheets of plastic with a nondirectional colour pattern; in which multicoloured granules are prepared from at least two differently coloured compositions, comprising the constituents of the polymeric binder, the respective pigment and/or the respective dye as well as, if appropriate, customary fillers, additives and processing aids, the particles having colour regions (2, 3) in which the colour tones are essentially not mixed with one another and the length of a colour region is a multiple of its width, characterized in that the multicoloured granules are pressed in a compressing unit to form a web or sheet, the multicoloured particles of the granules having a thickness approximately corresponding to the width and their length being about 3 to about 20 times the width, and the colour regions (2, 3) extending essentially parallel to the longitudinal axis of the granule particles.

2. Process according to Claim 1, the length of the granule particle being about 5 to about 15 times the width.

3. Process according to Claim 1, the length of the granule particle being about 8 to about 12 times the width.

4. Process according to one of Claims 1 to 3, the granule particles having a length of up to about 10 cm.

5. Process according to one of Claims 1 to 4, the granule particles being formed such that they are wider at one end than at the other end.

6. Process according to one of Claims 1 to 5, the polymeric binder being a polymer based on PVC or linoleum.

## Revendications

1. Procédé de fabrication de lés ou de dalles en matière synthétique, homogènes et élastiques pour revêtement de sol, avec une création non orientée des dessins couleur, procédé dans lequel un granulat à plusieurs couleurs a été fabriqué à partir d'au moins deux masses colorées différemment, comprenant les éléments constitutifs du liant polymère, le pigment correspondant et/ou la matière colorante correspondante ainsi que, le cas échéant, des matières de remplissage, des additifs et des produits auxiliaires, tels qu'ils sont tous courants, dans lequel les particules présentent des zones de couleurs (2, 3) dans lesquelles les teintes ne sont globalement pas mélangées entre elles tandis que la longueur d'une zone de couleur représente un multiple de sa largeur,
caractérisé en ce que
le granulat à plusieurs couleurs est comprimé, dans un groupe de compactage pour constituer un lé ou une dalle, les particules à plusieurs couleurs du granulat présentant une épaisseur correspondant à peu près à la largeur et leur longueur étant comprise entre environ 3 fois et 20 fois la largeur, les zones de couleurs (2, 3) s'étendant sensiblement parallèlement à l'axe longitudinal des particules du granulat.

2. Procédé selon la revendication 1, dans lequel la longueur de la particule du granulat représente entre environ 5 fois et 15 fois la largeur.

3. Procédé selon la revendication 1, dans lequel la longueur de la particule du granulat représente entre environ 8 fois et 12 fois la largeur.

4. Procédé selon l'une des revendications 1 à 3, dans lequel les particules du granulat présentent une longueur allant jusqu'à environ 10 cm.

5. Procédé selon l'une des revendications 1 à 4, dans lequel les particules du granulat sont réalisées plus larges à une extrémité qu'à l'autre extrémité.

6. Procédé selon l'une des revendications 1 à 5, dans lequel le liant polymère est un polymère à base de PVC ou de linoléum.
